# FASCICULE DE BREVET EUROPEEN

(11) **EP 3 746 670 B1**
(45) Date de publication et mention de la délivrance du brevet: **24.11.2021**
(21) Numéro de dépôt: 19700815.4
(22) Date de dépôt: 17.01.2019
(51) Int. Cl.: F16D 29/00, F16D 25/08

(54) **ACTIONNEUR D'EMBRAYAGE**
KUPPLUNGSAKTUATOR
CLUTCH ACTUATOR

(30) Priorité: 31.01.2018 FR 1850797
(43) Date de publication de la demande: 09.12.2020
(73) Titulaire: VALEO EMBRAYAGES, 80009 Amiens (FR)
(72) Inventeur: MAUREL, Hervé, 80009 AMIENS (FR); POIRIER, Gael, 80009 AMIENS (FR)
(86) Numéro de dépôt international: PCT/EP2019/051114
(87) Numéro de publication internationale: WO 2019/149532

(56) Documents cités:
- WO-A1-2015/090316
- DE-A1-102008 063 752
- US-A1- 2005 189 190

## Description

La présente invention concerne un actionneur d'embrayage, notamment pour un système de transmission d'un véhicule automobile.

L'invention s'applique notamment, mais non exclusivement, à l'actionnement d'un embrayage simple ou double dont l'état au repos peut être normalement embrayé ou normalement débrayé, à l'actionnement d'un synchroniseur de boîte de vitesses pour transmission manuelle, à l'actionnement d'une boîte de vitesses robotisée, à l'actionnement d'une boîte de vitesses manuelle à double embrayage, ou encore à l'actionnement d'un embrayage de couplage d'un moteur thermique avec une machine électrique lorsque ces deux derniers font partie d'une chaîne de propulsion d'un véhicule hybride.

L'actionneur d'embrayage permet de passer d'un état embrayé, dans laquelle le système de transmission permet la transmission d'un couple ou d'un mouvement, à un état débrayé, dans laquelle une telle transmission n'est pas effectuée. L'actionneur d'embrayage permet également de maintenir le système dans l'état embrayé ou débrayé.

Le document WO 2015/090316 divulgue un actionneur d'embrayage comportant un carter, un moteur électrique monté sur le carter et dont l'axe de sortie est couplé en rotation à un premier pignon, un dispositif de transformation de mouvement de type roto-linéaire comportant une vis portant un second pignon engrenant avec le premier pignon et comportant un écrou. L'écrou coopère avec la vis et est couplé à la fois en rotation et en translation avec un organe de poussée. L'organe de poussée permet d'actionner le déplacement d'un piston d'un maître-cylindre, de façon à pouvoir déplacer un volume d'huile.

La rotation de l'axe du moteur entraîne ainsi le déplacement du piston, par l'intermédiaire des pignons et du dispositif de transformation de mouvement.

Un tel actionneur est dit hydrostatique en ce qu'il permet le déplacement d'un volume de fluide, sans toutefois générer un débit de fluide hydraulique, le volume de fluide restant en effet quasiment inchangé dans le temps.

L'invention propose une alternative aux solutions existantes.

A cet effet, l'invention concerne un actionneur d'embrayage comportant :
- un carter,
- un moteur électrique fixé sur le carter, comportant un arbre de sortie tournant,
- un dispositif de transformation de mouvement de type roto-linéaire, comportant un organe d'entrée, entraîné en rotation par l'arbre du moteur électrique, et un organe de sortie entraînant le déplacement en translation d'un organe de poussée apte à déplacer un fluide d'une chambre de pression, l'organe de poussée étant mobile entre une position déployée et une position rétractée,
caractérisé en ce que l'organe de poussée comporte une partie de couplage couplée et immobilisée en rotation avec l'organe de sortie et avec le carter, la partie de couplage étant déplaçable en translation avec l'organe de sortie, l'organe de poussée comportant en outre un piston solidaire axialement de la partie de couplage, ledit piston étant apte à déplacer le fluide contenu dans la chambre de pression, la partie de couplage étant formée par une pièce distincte du piston.

Le couplage de la partie de couplage avec l'organe de sortie et avec le carter peut être direct ou indirect, c'est-à-dire par l'intermédiaire d'un autre élément.

La réalisation de l'organe de poussée en deux parties permet de pouvoir adapter le matériau de chaque partie de l'organe de poussée en fonction des besoins.

La partie de couplage peut être réalisée en matériau thermoplastique comportant un lubrifiant sec ainsi que des fibres de renfort ou des charges minérales.

Le matériau thermoplastique peut être du polyamide, le lubrifiant sec pouvant être du PTFE.

Le matériau thermoplastique comporte par exemple 15% de lubrifiant sec. Les fibres de renfort sont par exemple des fibres de verre, des fibres de carbone ou des fibres d'aramide, et/ou des charges minérales.

Le piston peut être réalisé en matériau thermodurcissable, par exemple en résine de type bakélite.

Ceci permet de réduire la rugosité et d'éviter notamment l'accroche d'éventuels joints d'étanchéité montés autour du piston.

Le piston peut comporter une partie cylindrique tubulaire comprenant une paroi d'extrémité libre à une première extrémité, située dans la chambre de pression, et un rebord annulaire s'étendant radialement vers l'extérieur, à une autre extrémité, ledit rebord annulaire du piston étant intercalé axialement entre une partie radiale de la partie de couplage de l'organe de poussée, et une face radiale de l'organe de sortie.

Le piston peut comporter un organe magnétique dont la position selon un axe de déplacement du piston est apte à être détectée par un capteur solidaire du carter, le piston et la partie de couplage de l'organe de poussée étant couplés en rotation l'un par rapport à l'autre.

De cette manière, on garantit notamment le bon positionnement angulaire de l'élément magnétique par rapport au capteur.

Le rebord annulaire du piston peut comporter au moins une zone non cylindrique, par exemple deux zones non cylindriques diamétralement opposées, coopérant avec au moins une zone de forme complémentaire de la partie de couplage, de façon à assurer le couplage en rotation du piston et de la partie de couplage.

L'actionneur peut comporter au moins un premier joint annulaire et au moins un second joint annulaire décalés axialement l'un de l'autre par rapport à l'axe de déplacement de l'organe de poussée, chaque joint assurant l'étanchéité entre l'organe de poussée et une partie axialement fixe de l'actionneur d'embrayage, le premier joint étant apte à être soumis aux pressions de fluide générées dans la chambre de pression, le second joint étant apte à être soumis à des pressions de fluide plus faibles.

Le second joint peut par exemple être soumis à des pressions proches ou égales à la pression atmosphérique, tandis que le premier joint peut être soumis à des pressions importantes, comprises par exemple entre 30 et 60 bars, de préférence de l'ordre de 45 bars.

Au moins un canal de remplissage peut être formé à proximité de l'extrémité libre du piston, le canal de remplissage permettant de relier la chambre de pression et la zone située axialement entre le premier joint et le second joint, lorsque l'organe de poussée est situé dans sa position déployée, ladite zone étant reliée à un réservoir de fluide.

L'organe d'entrée peut comporter une vis, l'organe de sortie comportant un écrou.

La chambre de pression peut comporter une paroi annulaire périphérique s'étendant selon l'axe de déplacement en translation de l'organe de poussée et une paroi de fond, ladite chambre de pression comportant une sortie de fluide destinée à être raccordée à une conduite, ladite sortie de fluide s'étendant depuis la paroi périphérique, l'organe de poussée étant apte à s'étendre axialement en regard de la sortie de fluide lors de son déplacement en translation vers sa position déployée.

Un canal d'écoulement du fluide peut être formé dans la paroi périphérique de la chambre de pression, de manière à autoriser l'écoulement de fluide entre le fond de la chambre et l'extrémité correspondante de l'organe de poussée, d'une part, et la sortie de fluide, d'autre part.

La formation d'un canal d'écoulement dans la paroi périphérie de la chambre de pression permet de pouvoir placer la sortie de fluide sur la paroi périphérique de la chambre de pression tout en permettant l'écoulement de fluide depuis le volume situé entre l'extrémité libre du piston et le fond de la chambre de pression vers la sortie de fluide, lorsque le piston est déplacé vers sa position déployée. Par ailleurs, le guidage de l'organe de poussée peut être réalisé efficacement par la surface périphérique de la chambre de pression.

L'ensemble formé par le piston et la chambre de pression forme un émetteur hydraulique apte à coopérer avec un récepteur hydraulique par l'intermédiaire de la conduite.

La sortie de fluide peut s'étendre selon un axe formant un angle de 90°, par rapport à l'axe de déplacement du piston. Bien entendu, il est possible de faire varier cet angle en fonction des besoins.

Le fluide est par exemple de l'huile ou du liquide de frein.

Au moins un canal de remplissage peut être formé à proximité de l'extrémité libre du piston, le canal de remplissage permettant de relier la chambre de pression et la zone située axialement entre le premier joint et le second joint, lorsque l'organe de poussée est situé dans sa position déployée, ladite zone étant reliée à un réservoir de fluide.

Comme indiqué précédemment, l'extrémité libre de l'organe de poussée est l'extrémité qui est tournée vers la paroi de fond de la chambre de pression.

Une telle caractéristique permet de remplir la chambre de pression ou compenser une éventuelle perte de fluide, à l'aide du fluide contenu dans le réservoir, lorsque l'organe de poussée est situé dans sa position déployée.

Bien entendu, la course de l'organe de poussée permettant une telle liaison avec le réservoir peut être relativement faible, par exemple de l'ordre de 1 à 8 % de la course totale de l'organe de poussée, de façon à ne pas affecter de façon trop importante la course utile de l'organe de poussée. La course utile est définie comme étant la course permettant un déplacement de fluide sous pression vers la sortie de fluide.

Le piston peut comporter plusieurs canaux de remplissage.

L'organe d'entrée peut comporter une vis, l'organe de sortie comportant un écrou. La rotation de la vis entraîne ainsi le déplacement en translation de l'écrou.

L'organe d'entrée peut être entraîné en rotation par l'arbre du moteur électrique, par l'intermédiaire d'un réducteur de vitesses.

L'actionneur peut comporter un organe de guidage entourant au moins en partie l'organe de poussée, l'organe de poussée étant couplé en rotation à l'organe de guidage et étant apte à être déplacé en translation par rapport audit organe de guidage.

L'organe de guidage peut alors être fixe par rapport au carter.

L'arbre de sortie du moteur peut s'étendre suivant un axe A, l'organe d'entrée étant mobile en rotation autour d'un axe B parallèle à l'axe A.

Une telle disposition assure une bonne compacité radiale de l'actionneur.

La sortie de fluide peut comporter des moyens de raccordement destinés à coopérer de façon étanche et avec des moyens de raccordement complémentaires d'une conduite.

Les moyens de raccordement peuvent comporter un élément élastique apte à venir s'encliqueter dans une gorge des moyens de raccordement complémentaires, ou inversement.

La partie de couplage peut comprendre des zones formes déformables radialement, permettant le blocage axial par encliquetage sur l'organe de sortie.

L'actionneur d'embrayage peut également comporter l'une ou plusieurs des caractéristiques suivantes :
- L'organe de poussée comporte au moins une nervure ou cannelure, par exemple quatre nervures, montée dans au moins une rainure ou cannelure complémentaire de l'organe de guidage.
- L'actionneur comporte une carte électronique logée dans un boîtier électronique.
- Le moteur comporte un corps au moins en partie métallique, relié électriquement à la masse de la carte électronique.
- Des organes roulants sont montés entre le filet de la vis et le filet de l'écrou, lesdits organes roulants étant lubrifiés.
- L'actionneur d'embrayage comporte un carter et un couvercle délimitant un boîtier logeant au moins en partie le réducteur de vitesses.
- L'organe d'entrée est monté pivotant dans l'organe de guidage de guidage par l'intermédiaire d'un palier, tel par exemple qu'un roulement à billes.
- Le boîtier électronique est orienté perpendiculairement à l'axe A et à l'axe B. Une telle structure permet de réduire l'encombrement axial, c'est-à-dire dans la direction des axes A et B.
- Le boîtier électronique est fixé au carter du moteur.
- Le boîtier électronique et/ou la carte électronique comportent des moyens de dissipation de la chaleur.
- Le boîtier électronique comporte un corps et un couvercle.
- Le corps du boîtier électronique est par exemple réalisé en thermoplastique renforcé, le couvercle du boîtier électronique étant par exemple réalisé en alliage d'aluminium, ou inversement. L'alliage d'aluminium permet de mieux dissiper la chaleur.
- Le carter comprend une première partie formant un boîtier délimitant un volume interne, et une seconde partie creuse, s'étendant selon l'axe B depuis la première partie ;
- La seconde partie débouche dans le volume interne de la première partie.
- La première partie comporte une ouverture d'axe B.
- Le volume interne de la première partie est fermé par un couvercle apte à être fixé sur la première partie, par exemple par encliquetage, vissage ou soudage.
- Le carter et le couvercle sont en plastique et sont soudés l'un à l'autre par soudage laser ou par soudage à ultra-sons.
- Le carter de l'actionneur est fixé à un carter d'une boîte de vitesses, par exemple par l'intermédiaire d'un support.
- Le moteur électrique est un moteur à aimants permanents sans balais ou moteur dit « brushless ».
- Le moteur comporte un corps ou stator formant une platine ou une bride de fixation, ladite platine ou bride permettant la fixation du corps du moteur sur le carter, par exemple par l'intermédiaire de vis engagées dans des taraudages du carter.
- Le corps comporte une partie cylindrique de centrage, engagée et centrée dans l'ouverture d'axe A du carter.
- Un joint torique est ménagé entre ladite ouverture du carter et la périphérie externe de la partie cylindrique du corps.
- L'axe du moteur s'étend selon l'axe B au travers de l'ouverture du carter, et débouche dans le volume interne de la première partie du carter.
- L'axe du moteur porte un premier pignon comportant un nombre Z1 de dents.
- Un deuxième pignon est monté fou, c'est-à-dire librement en rotation, autour d'un axe ou d'une goupille.
- Ledit axe supportant le deuxième pignon est monté dans un trou de la première partie du carter, à une première extrémité, et dans un trou du couvercle, à une seconde extrémité.
- Le montage dudit axe dans les trous correspondants est réalisé sans jeu.
- Le deuxième pignon engrène avec le premier pignon supporté par le moteur.
- Un troisième pignon, d'axe B, est solidaire en rotation d'une première extrémité de la vis des moyens de transformation de mouvement.
- Le troisième pignon engrène directement avec le deuxième pignon et comporte un nombre Z2 de dents.
- Les trois pignons sont logés dans le volume interne du boîtier.
- Le rapport de réduction du réducteur formé par le premier pignon et par le troisième pignon, c'est-à-dire le rapport Z1/Z2 est compris entre 1 et 5.
- Les pignons sont lubrifiés avec de l'huile ou de la graisse.
- Le troisième pignon est fixé à l'extrémité arrière de la vis des moyens de transformation de mouvement, c'est-à-dire à l'extrémité située du côté du couvercle.
- La vis comporte une partie cylindrique lisse et une partie présentant un filetage.
- Le filetage de ladite vis comporte un pas et un profil compatibles avec l'utilisation de billes engagées dans les filets.
- Le carter et/ou le couvercle sont réalisés en aluminium, en acier ou en plastique.
- Les pignons sont réalisés en métal ou en plastique.
- La vis est supportée par un palier, par exemple un roulement à billes, à proximité de la première extrémité.
- Le palier comporte une bague interne entourant la vis et une bague externe logée dans l'organe de guidage.
- L'organe de guidage est en acier, en aluminium ou en plastique.
- L'organe de guidage comporte, au niveau d'une première extrémité, une première partie comprenant une embrase s'étendant radialement vers l'extérieur et comportant des trous permettant l'engagement de vis.
- Lesdites vis sont engagées dans des trous d'une plaque de fixation, par exemple de forme générale carrée, montée dans le volume interne de la première partie du carter.
- Chaque vis est engagée dans un filetage du carter.
- L'organe de guidage est solidaire du carter.
- L'organe de guidage comporte, à l'opposé du couvercle par rapport à la première partie du carter, une deuxième partie tubulaire d'axe B, comportant des cannelures ou des rainures.
- L'organe d'entrée, l'organe de sortie, l'organe de guidage et/ou l'organe de poussée sont logés, au moins en partie, dans la deuxième partie tubulaire du carter.
- L'organe de guidage est fixe par rapport à la deuxième partie tubulaire du carter.
- La deuxième partie du carter comporte au moins une rainure, nervure ou cannelure coopérant avec au moins une nervure, rainure ou cannelure complémentaire de l'organe de guidage.
- L'organe de guidage comporte une troisième partie, située en avant de la deuxième partie, de forme générale cylindrique et d'un diamètre inférieur au diamètre de la deuxième partie.
- Un épaulement radial annulaire est délimité entre la deuxième partie et la troisième partie.
- L'écrou présente un taraudage dont le pas et le profil sont compatibles avec l'utilisation de billes engagées dans les filets.
- Les billes, le filetage de la vis et le taraudage de l'écrou sont lubrifiés avec de la graisse.
- L'écrou des moyens de transformation de mouvement est logé dans la partie de couplage de l'organe de poussée.
- Le piston de l'organe de poussée est engagé à son extrémité avant dans la troisième partie de l'organe de guidage.
- Le diamètre externe du piston de l'organe de poussée correspond sensiblement au diamètre interne de la troisième partie de l'organe de guidage.
- Le déplacement du piston entraîne le déplacement d'un volume de fluide hydraulique dans la conduite, par exemple de l'huile, de façon à actionner un récepteur hydraulique, lui-même apte à actionner un embrayage.
- Le couvercle du boîtier est fixé ou encliqueté sur le corps du boîtier.

L'invention sera mieux comprise et d'autres détails, caractéristiques et avantages de l'invention apparaîtront à la lecture de la description suivante faite à titre d'exemple non limitatif en référence aux dessins annexés dans lesquels :
- La figure 1 est une vue en perspective d'un actionneur d'embrayage selon une forme de réalisation de l'invention,
- la figure 2 est une vue éclatée, en perspective, de l'actionneur,
- les figures 3 et 4 sont des vues en coupe axiale de l'actionneur,
- la figure 5 est une vue éclatée, en perspective, de l'organe de poussée,
- la figure 6 est une vue en perspective de l'organe de poussée,
- la figure 7 est une vue en coupe radiale de l'actionneur,
- la figure 8 est une vue en coupe radiale de l'actionneur,
- la figure 9 est une vue de détail illustrant les moyens de raccordement de la conduite et de la sortie de fluide, selon la première forme de réalisation de l'invention,
- la figure 10 est une vue correspondant à la figure 8, illustrant une seconde forme de réalisation de l'invention,

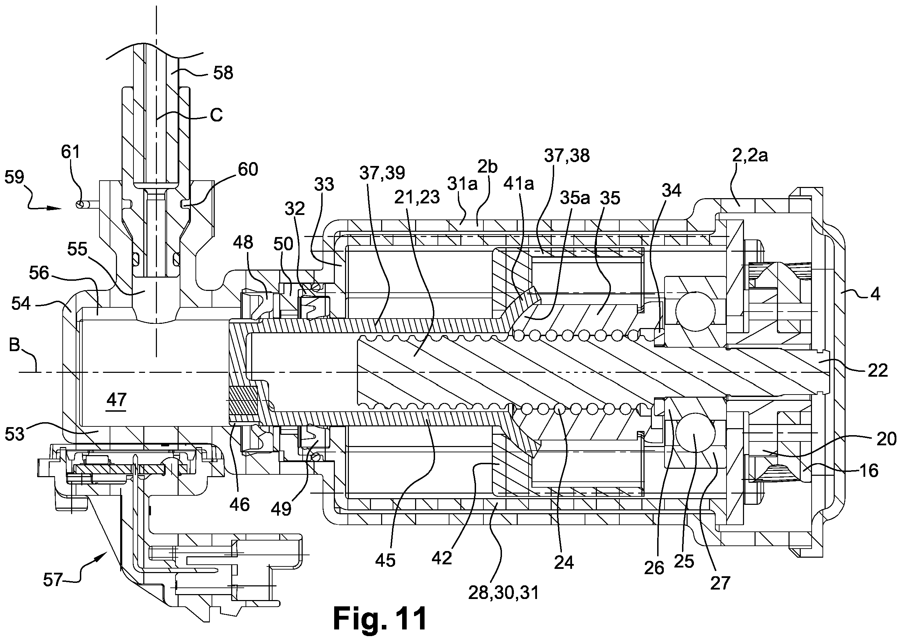

- la figure 11 est une vue en coupe axiale de l'actionneur.

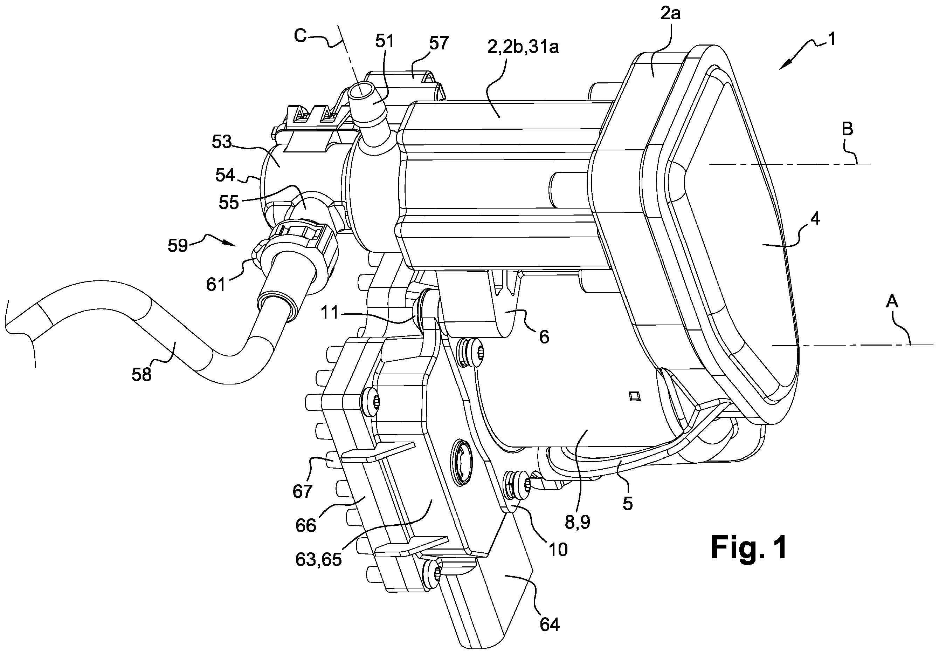

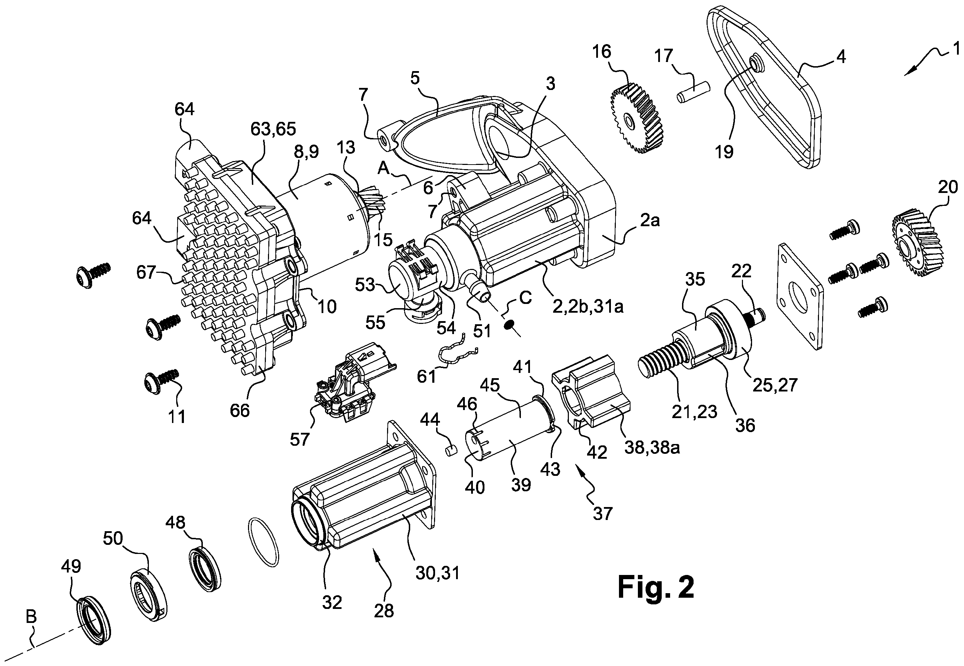

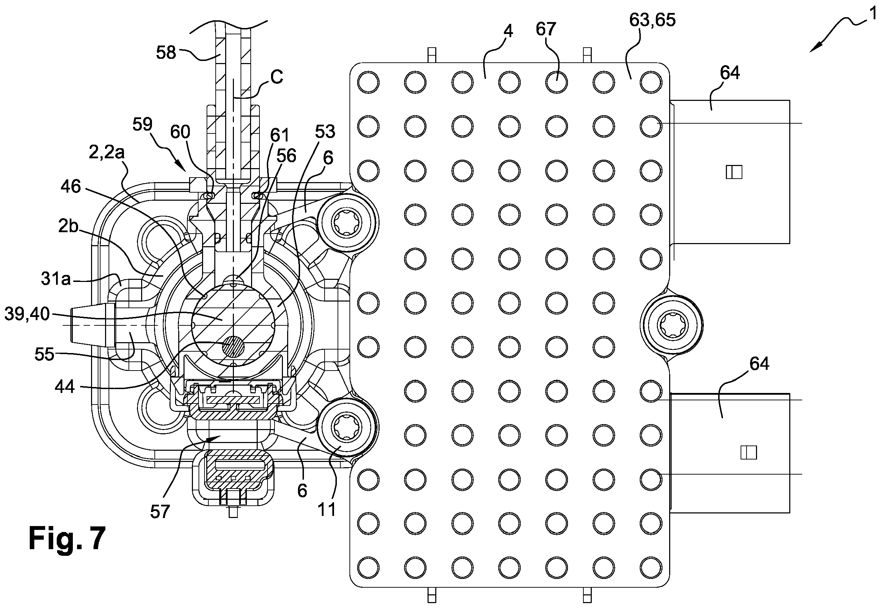

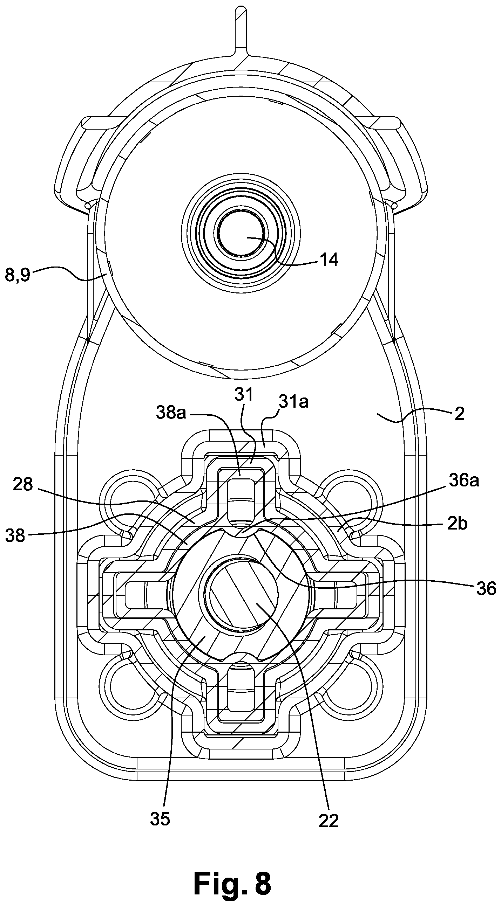

Les figures 1 à 8 illustrent un actionneur d'embrayage 1 selon une forme de réalisation de l'invention. Celui-ci comporte un carter 2 comprenant une première partie 2a formant un boîtier délimitant un volume interne et présentant une ouverture 3 (figure 2) d'axe A, et une seconde partie 2b tubulaire, s'étendant selon un axe B depuis la première partie. La seconde partie 2b débouche dans le volume interne de la première partie 2a. L'axe B est parallèle à l'axe A et est décalé par rapport audit axe A.

Le volume interne de la première partie 2a peut être fermé par un couvercle 4 apte à être fixé par encliquetage, vissage ou tout autre moyen approprié sur la première partie 2a. Le carter 2 et le couvercle 4 sont par exemple en plastique, ces éléments 2, 4 pouvant être soudés l'un à l'autre par soudage laser ou par soudage à ultra-sons.

Une excroissance de fixation 5 s'étend axialement depuis la première partie 2a. Des pattes de fixation 6 s'étendent radialement depuis la seconde partie 2b. L'excroissance de fixation 5 et les pattes de fixation 6 comporte des trous taraudés 7 (figure 2).

Le carter 2 de l'actionneur 1 est par exemple destiné à être fixé à un carter d'une boîte de vitesse, par exemple par l'intermédiaire d'un support non représenté.

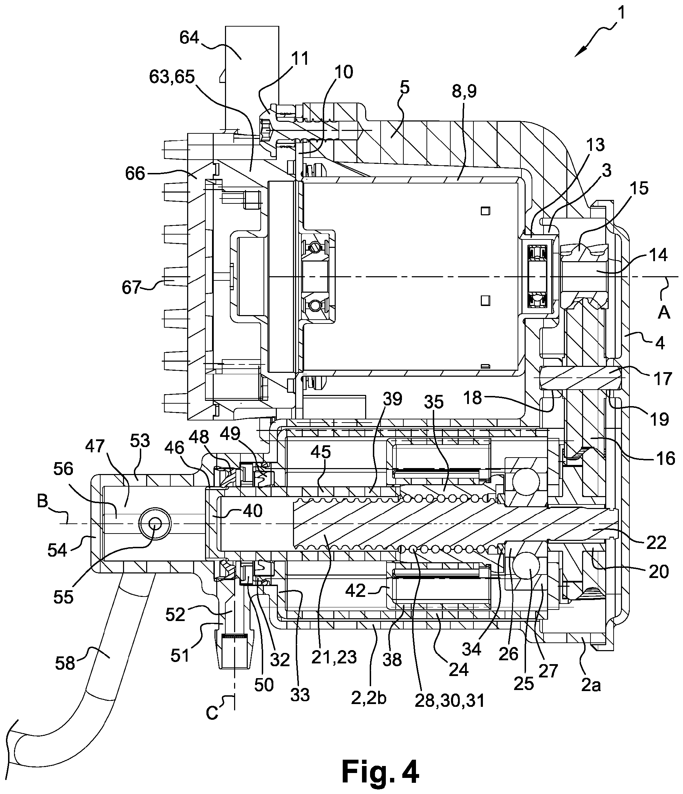

L'actionneur 1 comporte en outre un moteur électrique 8, en particulier un moteur à aimants permanents sans balais ou moteur dit « brushless », monté sur le carter 2. Le moteur 8 comporte un corps 9 ou stator formant une platine ou une bride de fixation 10, ladite platine ou bride 10 permettant la fixation du corps 9 du moteur 8 sur le carter 2, par exemple par l'intermédiaire de vis 11 engagées dans les trous taraudés 7. Le corps 9 comporte par ailleurs une partie cylindrique de centrage 13 (figure 4), engagée et centrée dans l'ouverture cylindrique 3 du carter 2. Le corps 9 comporte également au moins un connecteur.

Le moteur 8 comporte en outre un axe tournant 14, solidaire du rotor du moteur 8. L'axe 14 s'étend selon l'axe A au travers de l'ouverture 3, et débouche dans le volume interne de la première partie 2a du carter 2. L'axe 14 porte un premier pignon 15 comportant un nombre Z1 de dents. Un deuxième pignon16 est monté fou, c'est-à-dire librement en rotation, autour d'un axe ou d'une goupille 17. Ledit axe 17 est monté dans un trou 18 de la première partie 2a du carter 2, à une première extrémité, et dans un trou 19 du couvercle 4, à une seconde extrémité (figure 2). Le montage de l'axe 17 dans les trous 18, 19 peut être réalisé sans jeu. Le deuxième pignon 16 engrène avec le premier pignon 15 supporté par le moteur 8.

Un troisième pignon 20, d'axe B, est solidaire en rotation d'une première extrémité 22 d'une vis 21. Le troisième pignon 20 engrène directement avec le deuxième pignon 16 et comporte un nombre Z2 de dents. Les trois pignons 15, 16, 20 sont logés dans le volume interne du boîtier 2a. Le rapport de réduction, c'est-à-dire le rapport Z1/Z2 est par exemple compris entre 1 et 5, dans cette forme de réalisation. Les pignons 15, 16, 20 peuvent être lubrifiés avec de l'huile ou de la graisse.

Le troisième pignon 20 est fixé à l'extrémité arrière 22 de la vis 21, c'est-à-dire l'extrémité située du côté du couvercle 4.

La vis 21 comporte une partie arrière cylindrique 22 lisse et une partie avant 23 présentant un filetage.

Le filetage de ladite vis 21 comporte ici un pas et un profil compatibles avec l'utilisation de billes 24 engagées dans les filets.

Le carter 2 et/ou le couvercle 4 peuvent être réalisés en aluminium, en acier ou en plastique par exemple. Les pignons 15, 16, 20 sont par exemple réalisés en plastique ou en acier.

La vis 21 est supportée par un palier, ici un roulement à billes 25, à proximité de la première extrémité ou extrémité arrière 22. Le palier 25 comporte une bague interne 26 entourant la vis 21 et une bague externe 27 logée dans un organe de guidage 28.

L'organe de guidage 28 est par exemple réalisé en acier, en aluminium ou en plastique. Celui-ci comprend une partie arrière 30 tubulaire d'axe B et comportant des nervures ou rainures 31 engagées dans rainures ou nervures 31a de forme complémentaire de la partie 2b du carter. L'organe de guidage 28 comporte en outre une partie avant 32, de forme générale cylindrique et d'un diamètre inférieur au diamètre de la partie arrière 30. Un épaulement radial annulaire 33 est ainsi délimité entre la partie arrière 30 et la partie avant 32.

La bague externe 27 du palier 25 est logée dans la partie arrière 30 de l'organe de guidage 28.

Une bague 34 est montée axialement entre la bague interne 26 du palier 25 et l'extrémité arrière du filetage 23. Un écrou 35 est vissé sur la partie filetée 23 de la vis 21. Ledit écrou 35 présente un taraudage dont le pas et le profil sont compatibles avec l'utilisation de billes 24 engagées dans les filets de l'écrou 35 et de la vis 21. La périphérie radialement externe de l'écrou 35 comporte deux rainures 36 (figure 2) orientées selon l'axe B et diamétralement opposées. Chaque rainure 36 a une section en forme d'arc de cercle.

L'ensemble formé par l'écrou 35, la vis 21 et les billes 24 forment un ainsi un système de transformation de mouvement de type roto-linéaire, c'est-à-dire apte à transformer le mouvement de rotation de la vis 21 en un mouvement de translation de l'écrou 35, avec des frottements minimums, c'est-à-dire avec un rendement maximum. Les billes 24, le filetage de la vis 21 et le taraudage de l'écrou 35 peuvent être lubrifiés avec de la graisse.

L'écrou 35 est couplé en rotation à un organe de poussée 37. Ledit organe de poussée 37 comporte une première partie ou partie de couplage 38 située à l'arrière, de forme générale cylindrique, et une seconde partie ou piston 39, située à l'avant. Les deux parties 38, 39 sont formées par deux pièces distinctes l'une de l'autre.

La première partie 38 est réalisée en matériau thermoplastique, par exemple un matériau polyamide comportant du PTFE, par exemple 15% de PTFE. Le matériau thermoplastique peut comporter des fibres de renfort, tels par exemple que des fibres de verre, et/ou des charges minérales. La seconde partie est réalisée en matériau thermodurcissable. Ceci permet de réduire la rugosité et éviter l'accroche des joints d'étanchéités monté autour de la partie de poussé.

La première partie 38 comporte des nervures 38a coopérant par coopération de forme avec les rainures 31 de l'organe de guidage 28. De cette manière, l'organe de poussée 37, et plus particulièrement la première partie 38, est couplé et immobilisé en rotation par l'organe de guidage 28 et est apte à coulisser par rapport à celui-ci le long de l'axe B.

L'écrou 35 est logé dans la première partie 38. La première partie 38 comporte une zone en saillie engagée dans chaque rainure 36 de l'écrou 35 de manière à coupler en rotation l'écrou 35 et la première partie 38 de l'organe de poussée 37. L'extrémité avant de la première partie 38 de l'organe de poussée 37 comporte une partie 42 s'étendant radialement vers l'intérieur.

La seconde partie 39 de l'organe de poussée 37 est de forme générale cylindrique et tubulaire, et comporte une paroi d'extrémité libre 40 à une première extrémité, et un rebord annulaire 41 s'étendant radialement vers l'extérieur, à une autre extrémité. Ledit rebord annulaire 41 de la seconde partie 39 est intercalé axialement entre la partie radiale 42 et la face radiale avant de l'écrou 35.

La seconde partie 39 de l'organe de poussée 37 est engagée à son extrémité avant dans la partie avant 32 de l'organe de guidage 28. En particulier, le diamètre de la seconde partie 39 de l'organe de poussée 37 correspond sensiblement au diamètre de la partie avant 32 de l'organe de guidage 28 de façon à assurer un guidage en translation.

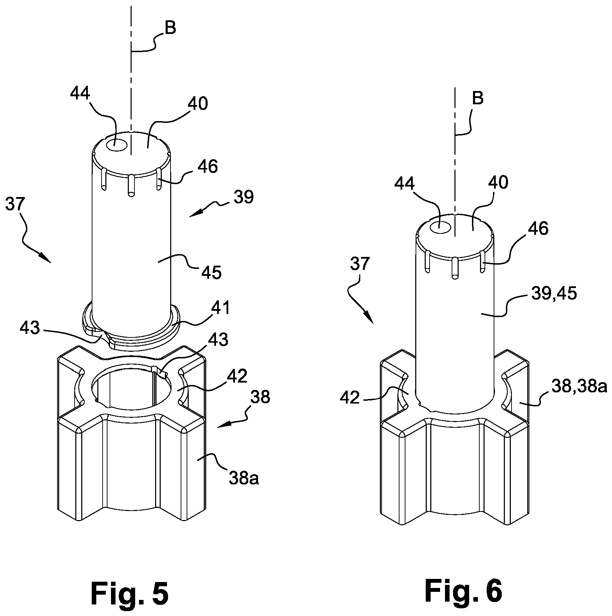

Les première et seconde parties 38, 39 comportent des moyens de couplage en rotation, ici des rainures et zones en saillie 43 (figure 5) de sections complémentaires en arc de cercle, situées de façon diamétralement opposées. La première partie 38 comprend également des zones déformables radialement permettant le blocage axial par encliquetage de la première partie 38 sur l'écrou 35.

Un aimant 44 est logé au niveau de la paroi d'extrémité libre 40 de la seconde partie 39 de l'organe de poussée 37. L'aimant est décalé de l'axe B de l'organe de poussée 37 et est situé à proximité de la paroi périphérique cylindrique 45 de la seconde partie 39. Ladite paroi périphérique 45 comporte par ailleurs des lunules ou canaux de remplissage 46 s'étendant selon l'axe B, régulièrement répartis sur la circonférence et débouchant sur la face d'extrémité avant 40 de la seconde partie 39 de l'organe de poussée 37. Lesdits canaux de remplissage 46 s'étendent sur une faible partie de la longueur de la seconde partie 39, par exemple sur une distance comprise entre 0,5 et 3 mm, par exemple de l'ordre de 1,5 mm.

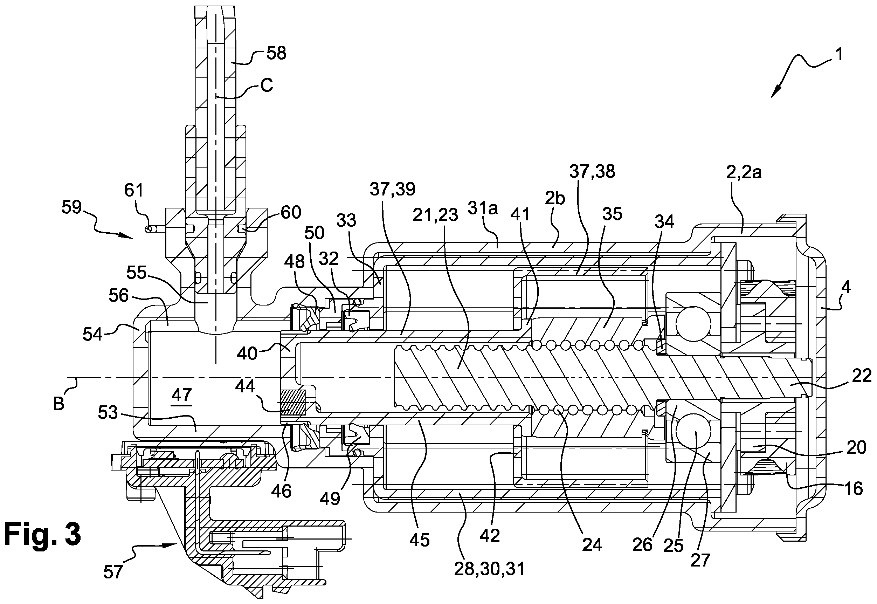

La seconde partie 2b du carter 2, loge la vis 21, l'écrou 35, l'organe de poussée 37 et l'organe de guidage 28. Ladite seconde partie 2b forme également, à l'avant, une chambre de pression 47 (figures 3 et 4) dans laquelle est située l'extrémité avant de la seconde partie 39 de l'organe de poussée 37.

Un premier joint annulaire 48, par exemple un joint à lèvre, est situé radialement entre la seconde partie 39 de l'organe de poussée 37 et le carter 2. Le premier joint 48 est fixe axialement par rapport au carter 2.

Un second joint annulaire 49, par exemple un joint à lèvre, est situé en arrière du premier joint 48, radialement entre la seconde partie 39 de l'organe de poussée 37 et la partie avant 32 de l'organe de guidage 28. Le second joint 49 est fixe axialement par rapport à l'organe de guidage 28 et au carter 2. Une ou plusieurs bagues annulaires 50 sont intercalées axialement entre les joints 48, 49.

Un réservoir de fluide débouche par un port 51 et un canal 52 dans la zone annulaire située axialement entre les joints 48, 49.

La chambre de pression 47 est délimitée par une paroi cylindrique périphérique 53 du carter 2, une paroi de fond 54 du carter 2, la paroi d'extrémité 40 de l'organe de poussée 37, et le second joint torique 49.

Une sortie de fluide 55 s'étend depuis la paroi périphérique cylindrique 53 de la chambre de pression, 47, selon un axe C orienté ici perpendiculairement à l'axe B et décalé vers l'arrière par rapport à la paroi de fond 54.

Un canal 56 d'écoulement du fluide est formé dans la paroi périphérique 53 de manière à autoriser l'écoulement de fluide entre le fond 54 de la chambre 47 et l'extrémité avant 40 de l'organe de poussée 37, d'une part, et la sortie de fluide 55, d'autre part. Le canal 56 s'étend selon l'axe B entre la sortie de fluide 55 et la paroi de fond 54 de la chambre de pression 47.

Un capteur de position 57 est monté à l'extérieur du carter 2, le capteur 57 étant apte à détecter sans contact la position de l'aimant 44, et donc la position de l'organe de poussée 37.

La sortie de fluide 55 est raccordée à une conduite 58, par l'intermédiaire de moyens de raccordement complémentaires 59.

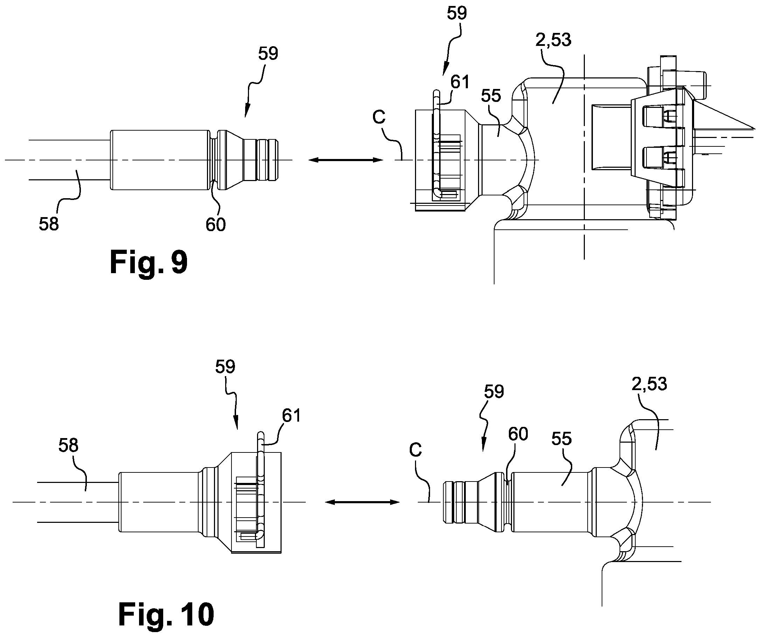

Dans la première forme de réalisation visible en figure 9, les moyens de raccordement 59 de la conduite 58 comportent une gorge 60, les moyens de raccordement 59 de la sortie de fluide 55 comportant un organe élastique 61 en forme générale de lyre, destiné à venir s'engager par encliquetage dans la gorge 60. Dans cette forme de réalisation, l'extrémité correspondante de la conduite 58 est engagée à l'intérieur des moyens de raccordement 59 de la sortie de fluide 55.

L'inverse peut également être prévu, comme illustré à la figure 10, cette figure représentant une seconde forme de réalisation dans laquelle les moyens de raccordement 59 de la sortie de fluide 55 comportent une gorge 60, les moyes de raccordement 59 de la conduite 58 comportant un organe élastique 61 destiné à venir s'engager par encliquetage dans la gorge 60. Dans cette forme de réalisation, l'extrémité correspondante de la sortie de fluide 55 est engagée à l'intérieur des moyens de raccordement 59 de la conduite 58.

Le déplacement de l'organe de poussée 37 entraîne le déplacement d'un volume de fluide hydraulique dans la conduite 58, par exemple de l'huile, de façon à actionner un récepteur hydraulique, lui-même apte à actionner un embrayage, comme cela est connu en soi.

L'actionneur 1 comporte en outre un boîtier 63 logeant une carte électronique de puissance et/ou de commande, ledit boîtier 63 étant fixé sur le carter 2, par l'intermédiaire de vis par exemple. Ces vis peuvent être les mêmes que les vis 11 servant à la fixation de la bride 10 du moteur 8.

La carte électronique et le boîtier 63 comportent des connecteurs 64, permettant de raccorder électriquement la carte au moteur électrique 8 et/ou à au moins un organe du véhicule (non représenté).

Ces connecteurs 64 peuvent également permettre de connecter la carte électronique à une source d'énergie électrique, par exemple à la batterie du réseau de bord du véhicule et/ou à un bus CAN (Controller Area Network) de façon à commander le moteur électrique à partir de l'unité de contrôle moteur (ECU) et/ou de l'unité de contrôle de l'embrayage (CCU) du véhicule, ces unités pouvant mettre en oeuvre un logiciel de supervision du système de transmission du véhicule. L'un des connecteurs 64 peut également être relié à au moins un capteur du véhicule, par exemple un capteur fournissant une information sur la position d'une pédale d'embrayage, un capteur fournissant une information sur la position d'un levier de vitesses, un capteur fournissant une information sur la position d'un élément de la boîte de vitesses et/ou au capteur de position de l'aimant ou à un capteur de position d'un récepteur hydraulique associé à l'actionneur 1.

Le boîtier 63 est orienté dans un plan s'étendant perpendiculairement aux axes A et B, de façon à augmenter la compacité axiale de l'actionneur 1.

Le boîtier 63 comporte un corps 65 et un couvercle 66 fixé ou encliqueté sur le corps. Le boîtier 63 comporte des moyens de dissipation thermique, ici au niveau du couvercle 66. Les moyens de dissipation thermique comportent des ailettes ou des éléments en saillie 67, par exemple des cônes, de manière à augmenter la surface d'échange thermique avec l'air environnant.

En fonctionnement, le moteur électrique 8 est commandé à l'aide de la carte électronique, entraînant la rotation de l'axe 14 et du premier pignon 15. Ce dernier entraîne alors en rotation le deuxième pignon 16, le troisième pignon 20 et la vis 21. La vitesse de rotation de la vis 21 est fonction de la vitesse de rotation du moteur 8 et du rapport de réduction Z2/Z1.

La rotation de la vis 21 entraîne le déplacement de l'écrou 35 selon l'axe B. Ce dernier étant en appui axial sur l'organe de poussée 37, ce dernier est alors déplacé suivant l'axe B entre une première rétractée, visible aux figures 3 et 4, et une position déployée. Ces deux positions extrêmes correspondent par exemple à des positions embrayée et débrayée de l'embrayage.

Le déplacement de l'écrou 35 et de l'organe de poussée 37 entraîne le déplacement du fluide hydraulique de manière à commander le récepteur hydraulique, par l'intermédiaire de la conduite 58.

On notera que le canal 56 permet d'alimenter la sortie de fluide 55 quelle que soit la position de l'organe de poussée 37. Par ailleurs, lorsque l'organe de poussée 37 atteint sa position rétractée, les canaux de remplissage 46 relient la chambre de pression 47 et la zone située axialement entre le premier joint 48 et le second joint 49, de façon à remplir la chambre de pression 47 et compenser une éventuelle perte de fluide, à l'aide du fluide contenu dans le réservoir.

Selon une forme de réalisation non représentée, l'ensemble formés par la vis 21, les billes 24 et l'écrou 35 peut être remplacé par un système de type vis-écrou conventionnel, dont le pas est plus réduit ou plus important. Dans un tel cas, il est nécessaire d'adapter le rapport de réduction.

Le pas apparent peut être plus réduit (plusieurs filets), mais pas le pas réel (ou pas hélicoïdal), qui est généralement plus grand pour assurer un rendement correct.

La vis à billes 21, 24 pourrait également être remplacée par une vis à rouleaux.

Par ailleurs, le réducteur composé des trois pignons 15, 16, 20 peut être remplacé par un réducteur comportant un premier pignon couplé en rotation à l'arbre 14 du moteur 8 et un second pignon couplé en rotation à l'extrémité arrière 22 de la vis 21, le premier pignon engrenant directement avec le second pignon.

Le réducteur peut comporter un ou plusieurs étages de réduction, par exemple deux étages de réduction, comme cela est connu du document EP 2 841 869 par exemple.

Quelle que soit la forme de réalisation envisagée, un tel actionneur 1 présente une structure compacte, présentant un faible encombrement selon les axes A et B et selon la direction perpendiculaire auxdits axes. Par ailleurs, il est possible d'utiliser de nombreux éléments du commerce, tels par exemple que la vis à billes 21, 24, par exemple. Le coût d'un tel actionneur 1 est par ailleurs relativement faible et peut être intégré aisément sur les systèmes de propulsion existants.

## Revendications

1. Actionneur d'embrayage (1) comportant :
- un carter (2),
- un moteur électrique (8) fixé sur le carter, comportant un arbre de sortie (14) tournant,
- un dispositif de transformation de mouvement de type roto-linéaire (21, 35), comportant un organe d'entrée (21), entraîné en rotation par l'arbre (14) du moteur électrique (8), et un organe de sortie (35) entraînant le déplacement en translation d'un organe de poussée (37) apte à déplacer un fluide d'une chambre de pression (47), l'organe de poussée (37) étant mobile entre une position déployée et une position rétractée,
**caractérisé en ce que** l'organe de poussée (37) comporte une partie de couplage (38) couplée et immobilisée en rotation avec l'organe de sortie (35) et avec le carter (2), la partie de couplage (38) étant déplaçable en translation avec l'organe de sortie (35), l'organe de poussée (37) comportant en outre un piston (39) solidaire axialement de la partie de couplage (38), ledit piston (39) étant apte à déplacer le fluide contenu dans la chambre de pression (47), la partie de couplage (38) étant formée par une pièce distincte du piston (39).

2. Actionneur d'embrayage (1) selon la revendication 1, **caractérisé en ce que** la partie de couplage (38) est réalisée en matériau thermoplastique comportant un lubrifiant sec ainsi que des fibres de renfort ou des charges minérales.

3. Actionneur d'embrayage (1) selon la revendication 2, **caractérisé en ce que** le matériau thermoplastique est du polyamide, le lubrifiant sec étant du PTFE.

4. Actionneur d'embrayage (1) selon l'une des revendications 1 à 3, **caractérisé en ce que** le piston (39) est réalisé en matériau thermodurcissable, par exemple en résine de type bakélite.

5. Actionneur d'embrayage (1) selon l'une des revendications 1 à 4, **caractérisé en ce que** le piston (39) comporte une partie cylindrique tubulaire (45) comprenant une paroi d'extrémité libre (40) à une première extrémité, située dans la chambre de pression (47), et un rebord annulaire (41) s'étendant radialement vers l'extérieur, à une autre extrémité, ledit rebord annulaire (41) du piston (39) étant intercalé axialement entre une partie radiale (42) de la partie de couplage (38) de l'organe de poussée (37), et une face radiale de l'organe de sortie (35).

6. Actionneur d'embrayage (1) selon l'une des revendications 1 à 5, **caractérisé en ce que** le piston comporte un organe magnétique (44) dont la position selon un axe (B) de déplacement du piston (39) est apte à être détectée par un capteur (57) solidaire du carter (2), le piston et la partie de couplage de l'organe de poussée étant couplés en rotation l'un par rapport à l'autre.

7. Actionneur d'embrayage selon les revendications 5 et 6, **caractérisé en ce que** le rebord annulaire (41) du piston (39) comporte au moins une zone non cylindrique (43), par exemple deux zones non cylindriques diamétralement opposées, coopérant avec au moins une zone de forme complémentaire de la partie de couplage (38), de façon à assurer le couplage en rotation du piston (39) et de la partie de couplage (38).

8. Actionneur d'embrayage (1) selon l'une des revendications 1 à 7, **caractérisé en ce qu'**il comporte au moins un premier joint annulaire (48) et au moins un second joint annulaire (49) décalés axialement l'un de l'autre par rapport à l'axe de déplacement (B) de l'organe de poussée (37), chaque joint (48, 49) assurant l'étanchéité entre l'organe de poussée (37) et une partie axialement fixe de l'actionneur d'embrayage (1), le premier joint (48) étant apte à être soumis aux pressions de fluide générées dans la chambre de pression (47), le second joint (49) étant apte à être soumis à des pressions de fluide plus faibles.

9. Actionneur d'embrayage (1) selon la revendication 8, **caractérisé en ce qu'**au moins un canal de remplissage (46) est formé à proximité de l'extrémité libre (40) du piston (38), le canal de remplissage (46) permettant de relier la chambre de pression (47) et la zone située axialement entre le premier joint (48) et le second joint (49), lorsque l'organe de poussée (37) est situé dans sa position déployée, ladite zone étant reliée à un réservoir de fluide.

10. Actionneur d'embrayage (1) selon l'une des revendications 1 à 9, **caractérisé en ce que** l'organe d'entrée comporte une vis (21), l'organe de sortie comportant un écrou (35).

11. Actionneur d'embrayage (1) selon l'une des revendications 1 à 10, **caractérisé en ce que** la partie de couplage (38) comprend des zones déformables radialement, permettant le blocage axial par encliquetage sur l'organe de sortie (35).

## Patentansprüche

1. Kupplungsaktuator (1), welcher aufweist:
- ein Gehäuse (2),
- einen an dem Gehäuse befestigten Elektromotor (8), der eine rotierende Abtriebswelle (14) aufweist,
- eine Vorrichtung zur Bewegungsumwandlung vom Typ eines Rotations-Linear-Wandlers (21, 35), die ein Eingangsorgan (21), das von der Welle (14) des Elektromotors (8) drehend angetrieben wird, und ein Ausgangsorgan (35) aufweist, das die translatorische Bewegung eines Schuborgans (37) antreibt, das geeignet ist, ein Fluid aus einer Druckkammer (47) zu verdrängen, wobei das Schuborgan (37) zwischen einer ausgefahrenen Position und einer zurückgezogenen Position beweglich ist,
**dadurch gekennzeichnet, dass** das Schuborgan (37) einen Kopplungsteil (38) aufweist, der mit dem Ausgangsorgan (35) und dem Gehäuse (2) gekoppelt und gegen Verdrehung gesichert ist, wobei der Kopplungsteil (38) mit dem Ausgangsorgan (35) translatorisch bewegbar ist, wobei das Schuborgan (37) außerdem einen Kolben (39) aufweist, der mit dem Kopplungsteil (38) axial fest verbunden ist, wobei der Kolben (39) geeignet ist, das in der Druckkammer (47) enthaltene Fluid zu verdrängen, wobei der Kopplungsteil (38) von einem vom Kolben (39) getrennten Teil gebildet wird.

2. Kupplungsaktuator (1) nach Anspruch 1, **dadurch gekennzeichnet, dass** der Kopplungsteil (38) aus thermoplastischem Material hergestellt ist, welches ein Trockenschmiermittel sowie Verstärkungsfasern oder mineralische Füllstoffe enthält.

3. Kupplungsaktuator (1) nach Anspruch 2, **dadurch gekennzeichnet, dass** das thermoplastische Material Polyamid ist, wobei das Trockenschmiermittel PTFE ist.

4. Kupplungsaktuator (1) nach einem der Ansprüche 1 bis 3, **dadurch gekennzeichnet, dass** der Kolben (39) aus wärmehärtbarem Material hergestellt ist, zum Beispiel aus Harz vom Typ Bakelit.

5. Kupplungsaktuator (1) nach einem der Ansprüche 1 bis 4, **dadurch gekennzeichnet, dass** der Kolben (39) einen rohrförmigen zylindrischen Teil (45) aufweist, der eine freie Endwand (40) an einem ersten Ende, das sich in der Druckkammer (47) befindet, und einen sich radial nach außen erstreckenden ringförmigen Rand (41) an einem anderen Ende umfasst, wobei der ringförmige Rand (41) des Kolbens (39) axial zwischen einem radialen Teil (42) des Kopplungsteils (38) des Schuborgans (37) und einer radialen Fläche des Ausgangsorgans (35) angeordnet ist.

6. Kupplungsaktuator (1) nach einem der Ansprüche 1 bis 5, **dadurch gekennzeichnet, dass** der Kolben ein magnetisches Organ (44) aufweist, dessen Position entlang einer Bewegungsachse (B) des Kolbens (39) von einem mit dem Gehäuse (2) fest verbundenen Sensor (57) detektierbar ist, wobei der Kolben und der Kopplungsteil des Schuborgans miteinander drehgekoppelt sind.

7. Kupplungsaktuator nach einem der Ansprüche 5 und 6, **dadurch gekennzeichnet, dass** der ringförmige Rand (41) des Kolbens (39) mindestens einen nicht zylindrischen Bereich (43) aufweist, zum Beispiel zwei einander diametral gegenüberliegende nicht zylindrische Bereiche, der mit mindestens einem Bereich mit einer zu dem Kopplungsteil (38) komplementären Form zusammenwirkt, um so die Drehkopplung des Kolbens (39) und des Kopplungsteils (38) sicherzustellen.

8. Kupplungsaktuator (1) nach einem der Ansprüche 1 bis 7, **dadurch gekennzeichnet, dass** er mindestens einen ersten Dichtungsring (48) und mindestens einen zweiten Dichtungsring (49) aufweist, die in Bezug auf die Bewegungsachse (B) des Schuborgans (37) axial zueinander versetzt sind, wobei jede Dichtung (48, 49) die Dichtigkeit zwischen dem Schuborgan (37) und einem axial ortsfesten Teil des Kupplungsaktuators (1) sicherstellt, wobei die erste Dichtung (48) mit den Fluiddrücken beaufschlagbar ist, die in der Druckkammer (47) erzeugt werden, wobei die zweite Dichtung (49) mit geringeren Fluiddrücken beaufschlagbar ist.

9. Kupplungsaktuator (1) nach Anspruch 8, **dadurch gekennzeichnet, dass** mindestens ein Füllkanal (46) in der Nähe des freien Endes (40) des Kolbens (38) ausgebildet ist, wobei der Füllkanal (46) ermöglicht, die Druckkammer (47) und den axial zwischen der ersten Dichtung (48) und der zweiten Dichtung (49) befindlichen Bereich zu verbinden, wenn sich das Schuborgan (37) in seiner ausgefahrenen Position befindet, wobei dieser Bereich mit einem Fluidbehälter verbunden ist.

10. Kupplungsaktuator (1) nach einem der Ansprüche 1 bis 9, **dadurch gekennzeichnet, dass** das Eingangsorgan eine Schraube (21) aufweist, während das Ausgangsorgan eine Mutter (35) aufweist.

11. Kupplungsaktuator (1) nach einem der Ansprüche 1 bis 10, **dadurch gekennzeichnet, dass** der Kopplungsteil (38) radial verformbare Bereiche aufweist, welche die axiale Arretierung durch Einrasten auf dem Ausgangsorgan (35) ermöglichen.

## Claims

1. Clutch actuator (1) comprising:
- a casing (2),
- an electric motor (8) fixed to the casing, comprising a rotary output shaft (14),
- a movement-conversion device of rotary-linear type (21, 35), comprising an input member (21) driven in rotation by the shaft (14) of the electric motor (8), and an output member (35) driving the translational movement of a pushing member (37) able to displace a fluid of a pressure chamber (47), the pushing member (37) being able to move between a deployed position and a retracted position,
**characterized in that** the pushing member (37) comprises a coupling part (38) coupled to and immobilized in terms of rotation with respect to the output member (35) and the casing (2), the coupling part (38) being capable of translational movement with the output member (35), the pushing member (37) further comprising a piston (39) axially secured to the coupling part (38), said piston (39) being able to displace the fluid contained in the pressure chamber (47), the coupling part (38) being formed by a component distinct from the piston (39) .

2. Clutch actuator (1) according to Claim 1, **characterized in that** the coupling part (38) is made of thermoplastic material containing a dry lubricant as well as reinforcing fibers or mineral fillers.

3. Clutch actuator (1) according to Claim 2, **characterized in that** the thermoplastic material is polyamide, the dry lubricant being PTFE.

4. Clutch actuator (1) according to one of Claims 1 to 3, **characterized in that** the piston (39) is made of thermosetting material, for example resin of the bakelite type.

5. Clutch actuator (1) according to one of Claims 1 to 4, **characterized in that** the piston (39) comprises a tubular cylindrical part (45) comprising a free end wall (40) at a first end, situated in the pressure chamber (47), and an annular rim (41) extending radially outward at another end, said annular rim (41) of the piston (39) being interposed axially between a radial part (42) of the coupling part (38) of the pushing member (37), and a radial face of the output member (35).

6. Clutch actuator (1) according to one of Claims 1 to 5, **characterized in that** the piston comprises a magnetic member (44) of which the position along an axis (B) of movement of the piston (39) is able to be detected by a sensor (57) secured to the casing (2), the piston and the coupling part of the pushing member being coupled in terms of rotation relative to one another.

7. Clutch actuator according to Claims 5 and 6, **characterized in that** the annular rim (41) of the piston (39) comprises at least one non-cylindrical region (43), for example two diametrically opposite non-cylindrical regions, collaborating with at least one region of complementary shape belonging to the coupling part (38), so as to provide rotational coupling between the piston (39) and the coupling part (38).

8. Clutch actuator (1) according to one of Claims 1 to 7, **characterized in that** it comprises at least a first annular seal (48) and at least a second annular seal (49) which are axially offset from one another with respect to the axis (B) of movement of the pushing member (37), each seal (48, 49) providing sealing between the pushing member (37) and an axially fixed part of the clutch actuator (1), the first seal (48) being able to be subjected to the fluid pressures generated in the pressure chamber (47), the second seal (49) being able to be subjected to lower fluid pressures.

9. Clutch actuator (1) according to Claim 8, **characterized in that** at least one filling duct (46) is formed in the vicinity of the free end (40) of the piston (38), the filling duct (46) making it possible to connect the pressure chamber (47) and the region situated axially between the first seal (48) and the second seal (49), when the pushing member (37) is situated in its deployed position, said region being connected to a reservoir of fluid.

10. Clutch actuator (1) according to one of Claims 1 to 9, **characterized in that** the input member comprises a screw (21), the output member comprising a nut (35).

11. Clutch actuator (1) according to one of Claims 1 to 10, **characterized in that** the coupling part (38) comprises radially deformable regions, allowing it to be immobilized axially by clip-fastening onto the output member (35).
